# EUROPEAN PATENT SPECIFICATION

(11) **EP 2 092 003 B1**
(45) Date of publication and mention of the grant of the patent: **05.11.2014**
(21) Application number: 07862588.6
(22) Date of filing: 06.12.2007
(51) Int. Cl.: C08J 9/14, C08G 18/32

(54) **MICROCELLULAR POLYURETHANE SHOE SOLES BLOWN WITH WATER AND AUXILIARY COMPOUNDS**
MIT WASSER UND HILFSVERBINDUNGEN GEBLÄHTE SCHUHSOHLEN AUS MIKROZELLULAREM POLYURETHAN
SEMELLES DE CHAUSSURES EN POLYURÉTHANE MICROCELLULAIRE EXPANSÉES AVEC DE L'EAU ET DES ADJUVANTS

(30) Priority: 12.12.2006 US 874306 P
(43) Date of publication of application: 26.08.2009
(73) Proprietor: Dow Global Technologies LLC, Midland, MI 48674 (US)
(72) Inventor: BENVENUTI, Andrea B., 42015 Correggio (IT); CORINTI, Elisa C., 42015 Correggio (IT); PELLACANI, Luigi, 41012 Carpi (IT)
(74) Representative: Beck Greener
(86) International application number: PCT/US2007/024994
(87) International publication number: WO 2008/073267

(56) References cited:
- EP-A- 0 463 479
- EP-A- 0 711 798
- EP-A- 1 304 349

## Description

This invention relates to methods for producing microcellular polyurethanes, particularly shoe soles.

Microcellular shoe soles are produced by forming a polyurethane-forming reaction mixture that includes at least one blowing agent, and introducing the mixture into a mold where it expands and cures into the shape of the shoe sole. It is common, particularly in Europe, to produce microcellular polyurethane shoe soles using a mixture of HFC-134a and water as the blowing agent. However, the use of HFC-134a in shoe sole applications is being regulated more strictly, particularly in Europe, and a change to an alternative blowing agent is becoming necessary.

A potential alternative blowing agent is a light hydrocarbon, but these materials tend to be highly flammable and thus raise a number of safety and exposure concerns. Water, which reacts with a polyisocyanate to generate carbon dioxide, is another potential substitute blowing agent. The carbon dioxide forms gas bubbles which expand the polyurethane to form the desired cellular structure. Water is used in many polyurethanes applications as a blowing agent.

After the shoe sole cures and is subsequently cooled (either within the mold or after being demolded), a certain amount of linear shrinkage will occur. For HFC-134a and HFC-134a/water-based formulations, the extent to which this shrinkage occurs is generally repeatable and predictable. Shoe sole molds are constructed a bit larger than the size of the final shoe sole will be, in order to take this shrinkage into account. Typically, this linear shrinkage is in the range of from 0.8 to 1.5%, and is most often from about 1 to 1.25%.

It has been found that when water is used to replace HFC-134a as the blowing agent in microcellular shoe sole applications, the linear shrinkage is reduced significantly. The linear shrinkage also appears to be sensitive to changes in isocyanate index (the ratio of isocyanate groups to isocyanate-reactive groups in the system).

Small differences in linear shrinkage have a very substantial impact on shoe sole manufacturers. Shoes are often made to close tolerances to provide a proper fit and to match the sole correctly with uppers and other components. The difference in shrinkage characteristics between HFC-134a-blown and water-blown systems is great enough that molds which are used for the HFC-134a systems often cannot be used with the water-blown systems. This represents a potentially large expense to shoe manufacturers for producing new molds for use with the new water-blown systems. Shoe manufacturers want to avoid this expense, and for that reason strongly desire an alternative microcellular polyurethane system that has shrinkage characteristics very close to those of the HFC-134a systems.

This invention is a process for preparing an integral skin microcellular polyurethane elastomer, comprising
a) forming a reactive mixture containing at least
   1) a high molecular weight polyol or mixture thereof, the polyol or mixture thereof having an average functionality of from 1.8 to 3 hydroxyl groups per molecule and an average hydroxyl equivalent weight of from 400 to 6000;
   2) at least one chain extender;
   3) at least one polyisocyanate;
   4) from about 0.1 to about 1 part of water per 100 parts by weight of component 1); and
   5) from about 0.5 to about 5 parts of one or more of the following auxiliaries:
      5-a) 1,2-trans-dichloroethene
      5-b) propyl propionate, and
      5-c) one or more hydrocarbons having a boiling point of from 100 and 250°C and a flash point above 30°C;
b) curing the reactive mixture in a closed mold to form an integral skin microcellular polyurethane elastomer.

The resulting microcellular polyurethane often exhibits a linear shrinkage in the range of from 0.8 to 1.5%, and is most often from about 1 to 1.25%, when foam density is from about 400 to 700 kg/m³. Linear shrinkage is measured by storing the demolded part for 24 hours at room temperature (~23°C) and ~50% humidity, and comparing its length (longest dimension) with the longest dimension of the mold. Linear shrinkage values are expressed in relation to the longest dimension of the mold.

The invention is also a formulated polyol composition comprising a blend of components 1-5 above. The formulated polyol composition has a further advantage of having low flammability. In many cases, the formulated polyol composition has a flash point higher than 65°C, and is therefore rated as non-flammable according to ISO 1523, despite the presence of the auxiliary. This is a significant advantage, as other possible approaches, such as the use of light hydrocarbons as blowing agents, result in polyol formulations having low flash points and therefore can represent significant fire risks.

The polyol component contains one or more high equivalent weight polyols. By "high equivalent weight polyol", it is meant a polyol having an atomic mass of from 400 to 6000 times the total number of hydroxyl groups on the polyol molecule. The high equivalent weight polyol contains an average of from 1.8 to 3.0 hydroxyl groups per molecule. Preferred high equivalent weight polyols have an average equivalent weight of from about 600 to 1800 and an average functionality of from 2.0 to 3.0. Especially preferred high equivalent weight polyols have an average equivalent weight of from 800 to 1500 and an average functionality of from 2.0 to 3.0.

Suitable high equivalent weight polyols include polyether polyols and polyester polyols. The high equivalent weight polyol may be derived from an animal fat or vegetable oil.

Suitable polyether polyols include, for example, polymers of propylene oxide, ethylene oxide, 1,2-butylene oxide, tetramethylene oxide, block and/or random copolymers thereof, and the like. Of particular interest are poly(propylene oxide) homopolymers, random copolymers of propylene oxide and ethylene oxide in which the poly(ethylene oxide) content is, for example, from about 1 to about 30% by weight, ethylene oxide-capped poly(propylene oxide) polymers and ethylene oxide-capped random copolymers of propylene oxide and ethylene oxide. The polyether polyols may be one that contains only low amounts of terminal unsaturation (for example, less than 0.02 meq/g or less than 0.01 meq/g), such as those made using so-called double metal cyanide (DMC) catalysts, as described for example in US Patent Nos. 3,278,457, 3,278,458, 3,278,459, 3,404,109, 3,427,256, 3,427,334, 3,427,335, 5,470,813 and 5,627,120. Polyester polyols typically contain about 2 hydroxyl groups per molecule and have an equivalent weight per hydroxyl group of from 400 to 1500.

Polymer polyols of various sorts may be used as well. Polymer polyols include dispersions of polymer particles, such as polyurea, polyurethane-urea, polystyrene, polyacrylonitrile and polystyrene-co-acrylonitrile polymer particles, in a polyol, typically a polyether polyol. Suitable polymer polyols are described in US Patent Nos. 4,581,418 and 4,574,137. It is generally preferred that at least a portion of the high equivalent weight polyol(s) is one or more polymer polyols.

A variety of polyols which are derived from animal fats or vegetable oils especially can be used as the high equivalent weight polyol. Among those are transesterified "blown" vegetable oils as described in US Published Patent Applications 2002/0121328, 2002/0119321 and 2002/0090488. A more preferred type of vegetable oil-derived polyols is a hydroxymethyl-containing polyester polyol such as is described in WO 04/096882 and WO 04/096883.

The reactive mixture contains at least one chain extender. For the purposes of this invention, a chain extender is a material having two isocyanate-reactive groups per molecule and an equivalent weight per isocyanate-reactive group of less than 400, especially from 31 to 125. The isocyanate reactive groups are preferably hydroxyl, primary aliphatic or aromatic amine or secondary aliphatic or aromatic amine groups. Representative chain extenders include, ethylene glycol, diethylene glycol, 1,2-propylene glycol, dipropylene glycol, tripropylene glycol, ethylene diamine, phenylene diamine, bis(3-chloro-4-aminophenyl)methane and 2,4-diamino-3,5-diethyl toluene. The hydroxyl-functional chain extenders are preferred. 1,4-butane diol, propylene glycol, dipropylene glycol and tripropylene glycol are especially preferred.

The organic polyisocyanate may be a polymeric polyisocyanate, aromatic isocyanate, cycloaliphatic isocyanate, or aliphatic isocyanate. Exemplary polyisocyanates include m-phenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate, naphthylene-1,5-diisocyanate, methoxyphenyl-2,4-diisocyanate, diphenylmethane-4,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, a polymethylene polyphenylisocyanate (PMDI), 4,4' and/or 2,4'-methylenediphenyldiisocyanate (MDI), toluene-2,4,6-triisocyanate and 4,4'-dimethyldiphenylmethane-2,2',5,5'-tetraisocyanate.

A preferred type of polyisocyanate is a prepolymer or quasi-prepolymer prepared by reacting an isocyanate compound as just described with one or more isocyanate-reactive materials, to form a mixture of isocyanate-terminated having an average -NCO content of from 15 to 25%, especially from 18 to 23% by weight. The isocyanate functionality of the prepolymer is preferably from about 2.0 to 3.0, especially from 2.1 to about 2.6 isocyanate groups/molecule. The isocyanate-reactive materials used to make the prepolymer or quasi-prepolymer is preferably one or more high equivalent weight polyols as described before, optionally in combination with one or more chain extenders and/or crosslinkers. The preferred polyisocyanate quasi-prepolymer is prepared from MDI or a PMDI, one or more high equivalent weight polyether polyols and optionally an hydroxyl-terminated chain extender such as 1,4-butanediol, propylene glycol, dipropylene glycol and tripropylene glycol (or mixture of two or more thereof).

The reactive mixture contains water. Water can be used as the sole blowing agent.

The reaction mixture further contains one or more of the following auxiliaries: 1,2-trans-dichloroethene, propyl propionate, or one or more hydrocarbons having a boiling point of from 100 and 250°C and a flash point above 30°C. The hydrocarbon may be aromatic or aliphatic, and if aliphatic; branched, linear or cyclic. Aliphatic hydrocarbons may be unsaturated. A suitable hydrocarbon mixture is commercially available from Exxon Mobil Chemicals as Isopar G.

Preferred auxiliary compounds is 1,2-trans-dichloroethene, as this material produces microcellular polyurethanes having low odor. Polyol mixtures containing effective amounts of 1,2-trans dichloroethene tend to be less flammable than those containing effective amounts of methylal.

One or more catalysts are preferably present in the reactive mixture. A wide variety of materials are known to catalyze polyurethane forming reactions, including tertiary amines, tertiary phosphines, various metal chelates, acid metal salts, strong bases, various metal alcoholates and phenolates and metal salts of organic acids. Catalysts of most importance are organotin catalysts and tertiary amine catalysts, which can be used singly or in some combination. It is usually preferred to use a combination of at least one "gelling" catalyst, which strongly promotes the reaction between an alcohol group with an isocyanate, and at least one "blowing" catalyst, which strongly promotes the reaction of an isocyanate group with a water molecule.

Examples of suitable organotin catalysts are stannic chloride, stannous chloride, stannous octoate, stannous oleate, dimethyltin dilaurate, dibutyltin dilaurate, dibutyltin dioctoate, other organotin compounds of the formula SnRₙ(OR)_{4·n}, wherein R is alkyl or aryl and n is from 0 to 2, mercaptotin catalysts, and the like.

Examples of tertiary amine catalysts include: trimethylamine, triethylamine, N-methylmorpholine, N-ethylmorpholine, N,N-dimethylbenzylamine, N,N-dimethylethanolamine, N,N,N',N'-tetramethyl-1,4-butanediamine, N,N-dimethylpiperazine, 1,4-diazobicyclo-2,2,2-octane, bis(dimethylaminoethyl)ether, triethylenediamine and dimethylalkylamines where the alkyl group contains from 4 to 18 carbon atoms. Mixtures of these tertiary amine catalysts can be used. Examples of suitable commercially available amine catalysts include Niax™ A1 (bis(dimethylaminoethyl)ether in propylene glycol available from GE OSi Silicones), Niax™ B9 (N,N-dimethylpiperazine and N-N-dimethylhexadecylamine in a polyalkylene oxide polyol, available from GE OSi Silicones), Dabco™ 8264 (a mixture of bis(dimethylaminoethyl)ether, triethylenediamine and dimethylhydroxyethyl amine in dipropylene glycol, available from Air Products and Chemicals), Dabco™ 33S(triethylene diamine in 1,4-butanediol, available from Air Products and Chemicals), and Dabco™ 33LV (triethylene diamine in dipropylene glycol, available from Air Products and Chemicals), Niax™ A-400 (a proprietary tertiary amine/carboxylic salt and bis (2-dimethylaminoethy)ether in water and a proprietary hydroxyl compound, available from GE OSi Silicones); Niax™ A-300 (a proprietary tertiary amine/carboxylic salt and triethylenediamine in water, available from GE OSi Specialties Co.); Polycat™ 58 (a proprietary amine catalyst available from Air Products and Chemicals), Polycat™ 5 (pentamethyl diethylene triamine, available from Air Products and Chemicals) and Polycat™ 8 (N,N-dimethyl cyclohexylamine, available from Air Products and Chemicals).

The foam formulation may contain one or more crosslinkers in addition to the high equivalent weight polyols and chain extenders described above. For purposes of this invention "crosslinkers" are materials having three or more isocyanate-reactive groups per molecule and an equivalent weight per isocyanate-reactive group of less than 400. Crosslinkers preferably contain from 3 to 8, especially from 3 to 4 hydroxyl, primary amine or secondary amine groups per molecule and have an equivalent weight of from 30 to about 200, especially from 50 to 125. Examples of suitable crosslinkers include diethanol amine, monoethanol amine, triethanol amine, mono- di- or tri(isopropanol) amine, glycerine, trimethylol propane, pentaerythritol, and the like.

In addition to the foregoing components, the foam formulation may contain various other optional ingredients such as surfactants, cell openers; fillers such as calcium carbonate; pigments and/or colorants such as titanium dioxide, iron oxide, chromium oxide, azo/diazo dyes, phthalocyanines, dioxazines and carbon black; reinforcing agents such as fiber glass, carbon fibers, flaked glass, mica, talc and the like; biocides; preservatives; antioxidants; flame retardants; and the like.

The quantity of most components in the mixture is conveniently expressed in terms of parts by weight per 100 parts by weight high equivalent weight polyol(s). The amount of chain extender may range from about 1 to about 50 parts per weight per 100 parts by weight high equivalent weight polyol(s). A more preferred amount is from 5 to 20 parts by weight, and an even more preferred amount is from 5 to 15 parts by weight, per 100 parts by weight high equivalent weight polyol(s). Crosslinkers, if used, may be present in an amount of up to 20 parts, preferably up to 10 parts and more preferably up to 5 parts per weight per 100 parts by weight high equivalent weight polyol(s).

A surfactant is preferably also present in the reactive mixture. A wide variety of silicone surfactants can be used in making the foams of this invention. Examples of such silicone surfactants are commercially available under the tradenames Tegostab™ (Th. Goldschmidt and Co.), Niax™ (GE OSi Silicones) and Dabco™ (Air Products and Chemicals. The amount of surfactant used will vary somewhat according to the particular application and surfactant that is used, but in general will be between 0.02 and 1 part by weight per 100 parts by weight high equivalent weight polyol(s). A preferred amount is from 0.08 to 0.3 parts by weight surfactant per 100 parts by weight high equivalent weight polyol(s).

Water is generally used in an amount of from about 0.35 to 1 part per 100 parts, preferably from about 0.4 to about 0.75 part and more preferably from 0.4 to 0.65 part by weight per 100 parts by weight high equivalent weight polyols. This amount is generally sufficient to produce a foam having a free rise density (i.e., the density of the foam that is formed when the reaction mixture is allowed to expand and cure against only atmospheric pressure) of from 150 to 350 g/L.

The reaction mixture suitably contains from 1.0 to 10, especially from 1.5 to about 7.5, and more preferably from 1.5 to about 5 parts by weight of the auxiliary per 100 parts by weight of the high equivalent weight polyol(s).

Organotin catalysts are typically used in small amounts, such as from 0.001 to 0.03 parts, preferably 0.05 to 0.015 parts, per 100 parts by weight high equivalent weight polyol(s). When used, tertiary amine catalysts are generally used in somewhat greater amounts, such as from 0.05 to about 5, especially from about 0.25 to about 2 parts per 100 parts by weight high equivalent weight polyol(s).

The amount of polyisocyanate that is used is commonly expressed in terms of isocyanate index, i.e., 100 times the ratio of NCO groups to isocyanate-reactive groups in the reaction mixture (including those provided by the water). The isocyanate index typically ranges from about 80 to 140, especially from about 90 to 120. For producing shoe soles, an especially preferred isocyanate index is from about 95 to 105.

In general, the microcellular foam is prepared by mixing the polyisocyanate and polyol composition in the presence of the water, auxiliary, surfactant, catalyst(s) and other optional ingredients as desired. The resulting reaction mixture is placed into a closed mold and subjected to conditions such that the polyisocyanate, water and polyol react to form a polyurethane and/or polyurea polymer while the water/isocyanate reaction generates carbon dioxide gas that expands the reacting mixture and reduces its density.

It is generally preferred to pre-mix the high equivalent weight polyol(s), chain extender(s), water, auxiliary, catalyst(s) and other components if any (notably at least one surfactant) into a formulated polyol component. Despite the presence of the auxiliary, the formulated polyol component in many cases has a flash point of above 65°C and is rated as non-flammable according to the closed cup equilibrium method of ISO 1523.

This formulated polyol component is then mixed with the polyisocyanate and the resulting mixture introduced into the mold. It is possible to bring the individual components individually, or in various admixtures, to a mixing head for mixing and dispensing.

Enough of the reaction mixture is charged to the mold to produce a cured product having a foam density of from about 250 to about 750 kg/m³. A preferred foam density is from about 400 to about 700 kg/m³. A more preferred foam density is from 450 to 650 kg/m³. The foam density is preferably from about 1.5 to about 3.0, especially from about 2.0 to 2.7, times the free rise density of the foam formulation.

The mold and/or the reactive mixture may be preheated if desired, but this is not required in all cases. The mold containing the reactive mixture may be heated after the reactive mixture is charged to the mold. If heating is used, a useful temperature is from 45 to 60°C.

The reaction mixture is maintained in the mold until it cures sufficiently that it can be demolded without becoming permanently distorted or damaged.

The invention is particularly suitable for producing microcellular shoe soles. Shoe soles made in accordance with the invention exhibit linear shrinkages that closely resemble those of microcellular polyurethane shoe soles that are made using HFC-134a as the blowing agent. This attribute is very significant to shoe sole manufacturers, who can continue to use molds designed for use with HFC-134a-containing formulations. This represents a significant cost savings. The linear shrinkage is typically from 0.8 to 1.5%, and is most often from about 1 to 1.25%, for a microcellular elastomer having a foam density of from 400 to 700 kg/m³, when measured according to the method described before.

The shrinkage characteristics of microcellular elastomers produced in accordance with the invention tend to be only mildly sensitive to changes in isocyanate index. This is particularly the case over a range of isocyanate index from about 95 to about 110 when water is sole blowing agent.

Another advantage of the invention is that the microcellular elastomer often exhibits a more open-celled structure than what is seen in similar systems that use water as the sole blowing agent and do not contain the auxiliary. A microcellular elastomer made in accordance with the invention usually has a somewhat open-celled structure, similar to those made using HFC-134a as a blowing agent. The open-celled structure permits somewhat lower foam density (such as from 400-550 kg/m³) products to be prepared with good physical properties and shrinkage values similar to those seen with HFC-134a-blown microcellular elastomers.

The following examples are provided to illustrate the invention, but are not intended to limit the scope thereof. All parts and percentages are by weight unless otherwise indicated.

### Example 1

A series of three microcellular polyurethanes at different densities are made in a 280-mm long "dog-bone" mold from the formulation described in Table 1:

**Table 1**

| Component | Parts By Weight |
|---|---|
| Polyol A¹ | 63.99 |
| Polyol B² | 17.27 |
| Copolymer Polyol A³ | 5.00 |
| 1,4-butanediol | 9.50 |
| Amine Catalyst A⁴ | 1.40 |
| Silicone Surfactant A⁵ | 0.10 |
| Amine Catalyst B⁶ | 0.10 |
| Organotin Catalyst A⁷ | 0.01 |
| Water | 0.43 |
| 1,2-transdichloroethene | 2.20 |
| Isocyanate-terminated prepolymer A⁸ | To 96 index |

| | |
|---|---|
| ¹Polyol A is a 2040 equivalent weight, nominally di-functional, poly(propylene oxide) end capped with 20% of ethylene oxide, sold commercially by Dow Chemical as Voranol® EP1900 polyol. ²Polyol B is 2040 equivalent weight, nominally trifunctional, poly(propylene oxide) end capped with 14% of ethylene oxide, sold commercially by Dow Chemical as Voranol® CP 6001 polyol. ³Copolymer Polyol A is a 2670 equivalent weight copolymer polyol containing 40.5% by weight dispersed styrene/acrylonitrile particles, sold commercially by Dow Chemical as Specflex®NC 700 polyol. ⁴Dabco 33S catalyst, sold by Air Products. ⁵DC 193 surfactant, sold by Air Products. ⁶Niax A1 catalyst, sold by GE OSi Silicones ⁷Dabco T 12 catalyst, sold by Air Products. ⁸A ~228 equivalent weight prepolymer prepared from a mixture of 2,4'- and 4,4'-diphenylmethanediisocyanate, Polyol A, Polyol B and dipropylene glycol. | |

All components except the polyisocyanate are blended into a compounded polyol formulation, which is blended at room temperature with the prepolymer, and immediately transferred to a mold that is heated to about 50°C. The part is demolded after about 4 minutes.

The foregoing composition has a free rise density of about 250 kg/m³. Three different moldings are made in the same mold, with a packing ratio of 2.0, 2.2 and 2.6, respectively, to form microcellular elastomers having densities of 500, 550 and 650 kg/m³, respectively. After demolding, the parts are aged for 24 hours at 23°C and 50% relative humidity. The length of the parts is then measured, and compared with the length of the mold. Results are as indicated in Table 4 below.

### Example 2 (not according to the invention)

Example 1 is repeated, using the following formulation (Table 2), to form three microcellular elastomers having densities of 500, 550 and 650 kg/m³.

**Table 2**

| Component | Parts By Weight |
|---|---|
| Polyol A¹ | 63.68 |
| Polyol B² | 17.26 |
| Copolymer Polyol A³ | 5.00 |
| 1,4-butanediol | 9.50 |
| Amine Catalyst A⁴ | 1.40 |
| Silicone Surfactant A⁵ | 0.10 |
| Amine Catalyst B⁶ | 0.10 |
| Organotin Catalyst A⁷ | 0.01 |
| Water | 0.45 |
| t-butanol | 2.50 |
| Isocyanate-terminated prepolymer A⁸ | To 96 index |

| | |
|---|---|
| ^{1.8}See corresponding notes in Table 1. | |

The resulting parts are tested for shrinkage as described in Example 1, with results as indicated in Table 4 below.

### Examples 3 and 4

Example 1 is again repeated, using the following formulation (Table 3), to form three microcellular elastomers having densities of 500, 550 and 650 kg/m³.

**Table 3**

| Component | Parts By Weight | |
|---|---|---|
| | Example 3 | Example 4 |
| Polyol A¹ | 63.30 | 62.30 |
| Polyol B² | 17.04 | 17.04 |
| Copolymer Polyol A³ | 5.00 | 5.00 |
| 1,4-butanediol | 9.50 | 9.50 |
| Amine Catalyst A⁴ | 1.40 | 1.40 |
| Silicone Surfactant A⁵ | 0.10 | 0.10 |
| Amine Catalyst B⁶ | 0.10 | 0.10 |
| Organotin Catalyst A⁷ | 0.01 | 0.01 |
| Water | 0.55 | 0.55 |
| Propyl propionate | 3.0 | 0 |
| Isopar G | 0 | 4.0 |
| Isocyanate-terminated prepolymer A⁸ | To 96 index | To 96 index |

| | | |
|---|---|---|
| ^{1.8}See notes 1-8 in Table 1 | | |

The resulting elastomers are tested for shrinkage as described in Example 1, with results as indicated in Table 4. In Table 4, Comparative Sample A is a microcellular elastomer made using a commercially available HFC-134a-based formulation. Comparative Sample B is a water-blown microcellular elastomer made without the use of an auxiliary.

**Table 4-Shrinkage Test Results, % of original length**

| | Example or Comp. Sample No. | | | | | |
|---|---|---|---|---|---|---|
| Density (kg/m³) | A* | B* | 1 | 2* | 3 | 4 |
| 500 | -1.10% | -0.60% | -1.18% | -1.03% | -1.10% | -1.13% |
| 550 | -1.06% | -0.40% | -1.02% | -0.97% | -0.95% | -1.05% |
| 650 | -0.85% | +0.20% | -0.79% | -0.67% | -0.64% | -0.45% |

| | | | | | | |
|---|---|---|---|---|---|---|
| *Not an example of the invention. | | | | | | |

The data for Comparative Sample B illustrates the difference in shrinkage behavior that is seen when the blowing agent is changed from HFC-134a to water. Shrinkage is reduced quite significantly at all density values. When the auxiliary is present during the foaming reaction, shrinkages are restored nearly to the same values as for Comparative Sample A. This is particularly true at the 500 and 550 kg/m³ densities, where the shrinkage behavior of Examples 1-4 is very similar to that of Comparative Sample A. At the higher 650 kg/m³ density, at which the water/no auxiliary formulation (Comparative Sample B) performs much differently than the HFC-134a formulation, the examples of the invention behave much more similarly to the control.

### Examples 5-9

Microcellular elastomer examples 5-9 are made in the same general manner as described in Example 1, at a foam density of 550 kg/m³, using the following formulations.

**Table 5**

| Component | Parts By Weight | | | | |
|---|---|---|---|---|---|
| | Example 5 | Example 6* | Example 7* | Example 8 | Example 9 |
| Polyol A¹ | 61.673 | 61.514 | 61.184 | 62.354 | 60.844 |
| Polyol B² | 17.673 | 17.673 | 17.673 | 17.673 | 16.673 |
| Copolymer Polyol A³ | 6.339 | 6.328 | 6.328 | 6.328 | 6.328 |
| 1,4-butanediol | 9.132 | 9.132 | 9.132 | 9.132 | 9.132 |
| Amine Catalyst A⁴ | 1.623 | 1.623 | 1.623 | 1.623 | 1.623 |
| Silicone Surfactant A⁵ | 0.200 | 0.200 | 0.200 | 0.200 | 0.200 |
| Amine Catalyst B⁶ | 0.15 | 0.15 | 0.15 | 0.15 | 0.15 |
| Organotin Catalyst A⁷ | 0.010 | 0.010 | 0.010 | 0.010 | 0.010 |
| Water | 0.40 | 0.37 | 0.54 | 0.53 | 0.54 |
| 1,2-transdichloroethene | 2.8 | 0.0 | 0 | 0 | 0 |
| Methylal | 0 | 3.0 | 0 | 0 | 0 |
| T-butanol | 0 | 0 | 2.5 | 0 | 0 |
| Propyl propionate | 0 | 0 | 0 | 2.0 | 0 |
| Isopar G | 0 | 0 | 0 | 0 | 4.5 |
| Isocyanate-terminated prepolymer A⁸ | 96 index | 96 index | 96 index | 96 index | 96 index |

| | | | | | |
|---|---|---|---|---|---|
| ^{1.8}See notes 1-8 of Table 1. * not according to the invention | | | | | |

Linear shrinkage is evaluated as described before for each of these microcellular elastomer parts, with results being as indicated in Table 6. Results for a control HFC-134a system (Comparative Sample C) and a water blown system (without any auxiliary) (Comparative Sample D) are included in Table 6 for comparison.

**Table 6**

| Example or Comparative Sample No. | Auxiliary Type | % of auxiliary | Water (%) | Linear Shrinkage (%) | Flash Point (°C), ISO 1523 |
|---|---|---|---|---|---|
| 5 | 1,2-trans dichloroethene | 2.8 | 0.40 | 1.10 | >65 |
| 6* | Methylal | 3.0 | 0.37 | 0.91 | 10 |
| 7* | t-butanol | 2.5 | 0.45 | 1.10 | >65 |
| 8 | Propyl propionate | 2.0 | 0.53 | 0.93 | >65 |
| 9 | Isopar G | 4.5 | 0.54 | 1.05 | 63 |
| C* | HFC-134a¹ | 2.0 | 0.13 | 0.97 | >65 |
| D* | None | 0 | 0.52 | 0.55 | >65 |

| | | | | | |
|---|---|---|---|---|---|
| *Not an example of the invention. | | | | | |

As before, the water-blown microcellular elastomers having the auxiliary present in the formulation exhibit shrinkages very similar to the HFC-134a/water blown control. Also as before, the water-blown elastomer made without the auxiliary exhibits substantially less shrinkage.

## Claims

1. A process for preparing an integral skin microcellular polyurethane elastomer, comprising
a) forming a reactive mixture containing at least the following components 1-5) :
1) a high molecular polyol or mixture thereof, the polyol or mixture thereof having an average functionality of from 1.8 to 3 hydroxyl groups per molecule and an average hydroxyl equivalent weight of from 400 to 6000;
2) a chain extender
3) a polyisocyanate
4) from about 0.1 to about 1 part of water per 100 parts by weight of component 1) and
5) from about 0.5 to about 5 parts of one or more of the follow auxiliaries:
5-a) 1,2-trans-dichloroethene
5-b) propyl propionate and
5-c) one or more hydrocarbons having a boiling point of from 100 and 250°C and a flash point above 30°C; and
b) curing the reactive mixture in a closed mold to form an integral skin microcellular polyurethane elastomer.

2. The process of claim 1 wherein the reactive mixture further contains at least one surfactant.

3. The process of claim 2 wherein the integral skin microcellular polyurethane elastomer is a shoe sole.

4. The process of claim 3 wherein the shoe sole has a density of from 450 to 650 kg/m³.

5. The process of claim 3 or claim 4 wherein the auxiliary is 1,2-trans-dichloroethene.

6. A formulated polyol composition comprising a blend of at least the following components 1-5):
1) a high molecular polyol or mixture thereof, the polyol or mixture thereof having an average functionality of from 1.8 to 3 hydroxyl groups per molecule and an average hydroxyl equivalent weight of from 400 to 6000;
2) a chain extender
3) a polyisocyanate
4) from about 0.1 to about 1 part of water per 100 parts by weight of component 1) and
5) from about 0.5 to about 5 parts of one or more of the follow auxiliaries:
5-a) 1,2-trans-dichloroethene
5-b) propyl propionate and
5-c) one or more hydrocarbons having a boiling point of from 100 and 250°C and a flash point above 30°C;

7. The formulated polyol composition of claim 6 further comprising at least one surfactant.

8. The formulated polyol composition of claim 7 wherein the auxiliary is 1,2-trans-dichloroethene.

## Patentansprüche

1. Ein Verfahren zur Herstellung eines mikrozellularen Polyurethan-Elastomers mit integraler Haut, beinhaltend:
a) Bilden einer reaktiven Mischung, die mindestens die folgenden Komponenten 1-5) enthält:
1) ein hochmolekulares Polyol oder eine Mischung davon, wobei das Polyol oder die Mischung davon eine durchschnittliche Funktionalität von 1,8 bis 3 Hydroxylgruppen pro Molekül und ein durchschnittliches Hydroxyläquivalentgewicht von 400 bis 6000 aufweist;
2) ein Kettenverlängerungsmittel
3) ein Polyisocyanat
4) von etwa 0,1 bis etwa 1 Teil Wasser pro 100 Gewichtsteile der Komponente 1) und
5) von etwa 0,5 bis etwa 5 Teile eines oder mehrerer der folgenden Hilfsstoffe:
5-a) 1,2-trans-Dichlorethen
5-b) Propylpropionat und
5-c) einem oder mehrerer Kohlenwasserstoffe mit einem Siedepunkt zwischen 100 und 250 °C und einem Flammpunkt über 30 °C; und
b) Härten der reaktiven Mischung in einer geschlossenen Form, um ein mikrozellulares Polyurethan-Elastomer mit integraler Haut zu bilden.

2. Verfahren gemäß Anspruch 1, wobei die reaktive Mischung ferner mindestens ein Tensid enthält.

3. Verfahren gemäß Anspruch 2, wobei das mikrozellulare Polyurethan-Elastomer mit integraler Haut eine Schuhsohle ist.

4. Verfahren gemäß Anspruch 3, wobei die Schuhsohle eine Dichte von 450 bis 650 kg/m³ aufweist.

5. Verfahren gemäß Anspruch 3 oder Anspruch 4, wobei der Hilfsstoff 1,2-trans-Dichlorethen ist.

6. Eine formulierte Polyolzusammensetzung, beinhaltend ein Gemisch aus mindestens den folgenden Komponenten 1-5):
1) einem hochmolekularen Polyol oder einer Mischung davon, wobei das Polyol oder die Mischung davon eine durchschnittliche Funktionalität von 1,8 bis 3 Hydroxylgruppen pro Molekül und ein durchschnittliches Hydroxyläquivalentgewicht von 400 bis 6000 aufweist;
2) einem Kettenverlängerungsmittel
3) einem Polyisocyanat
4) von etwa 0,1 bis etwa 1 Teil Wasser pro 100 Gewichsteile der Komponente 1) und
5) von etwa 0,5 bis etwa 5 Teile eines oder mehrerer der folgenden Hilfsstoffe:
5-a) 1,2-trans-Dichlorethen
5-b) Propylpropionat und
5-c) einem oder mehrerer Kohlenwasserstoffe mit einem Siedepunkt zwischen 100 und 250 °C und einem Flammpunkt über 30 °C.

7. Formulierte Polyolzusammensetzung gemäß Anspruch 6, ferner beinhaltend mindestens ein Tensid.

8. Formulierte Polyolzusammensetzung gemäß Anspruch 7, wobei der Hilfsstoff 1,2-trans-Dichlorethen ist.

## Revendications

1. Un procédé pour préparer un élastomère de polyuréthane microcellulaire à peau intégrée, comprenant :
a) la formation d'un mélange réactif contenant au moins les constituants 1 à 5) suivants :
1) un polyol de masse moléculaire élevée ou son mélange, le polyol ou son mélange ayant une fonctionnalité moyenne allant de 1,8 à 3 groupes hydroxyle par molécule et un poids équivalent d'hydroxyle moyen allant de 400 à 6 000 ;
2) un allongeur de chaîne
3) un polyisocyanate
4) d'environ 0,1 à environ 1 partie d'eau pour 100 parties en poids du constituant 1) et
5) d'environ 0,5 à environ 5 parties d'un ou de plusieurs des auxiliaires suivants :
5-a) le 1,2-trans-dichloroéthène
5-b) le propionate de propyle et
5-c) un ou plusieurs hydrocarbures ayant un point d'ébullition allant de 100 à 250 °C et un point d'éclair au-dessus de 30 °C ; et
b) le durcissement du mélange réactif dans un moule fermé pour former un élastomère de polyuréthane microcellulaire à peau intégrée.

2. Le procédé de la revendication 1 dans lequel le mélange réactif contient en outre au moins un agent tensioactif.

3. Le procédé de la revendication 2 dans lequel l'élastomère de polyuréthane microcellulaire à peau intégrée est une semelle de chaussure.

4. Le procédé de la revendication 3 dans lequel la semelle de chaussure a une masse volumique allant de 450 à 650 kg/m³.

5. Le procédé de la revendication 3 ou de la revendication 4 dans lequel l'auxiliaire est le 1,2-trans-dichloroéthène.

6. Une composition de polyol formulée comprenant un mélange homogène d'au moins les constituants 1 à 5) suivants :
1) un polyol de masse moléculaire élevée ou son mélange, le polyol ou son mélange ayant une fonctionnalité moyenne allant de 1,8 à 3 groupes hydroxyle par molécule et un poids équivalent d'hydroxyle moyen allant de 400 à 6 000 ;
2) un allongeur de chaîne
3) un polyisocyanate
4) d'environ 0,1 à environ 1 partie d'eau pour 100 parties en poids du constituant 1) et
5) d'environ 0,5 à environ 5 parties d'un ou de plusieurs des auxiliaires suivants :
5-a) le 1,2-trans-dichloroéthène
5-b) le propionate de propyle et
5-c) un ou plusieurs hydrocarbures ayant un point d'ébullition allant de 100 à 250 °C et un point d'éclair au-dessus de 30 °C.

7. La composition de polyol formulée de la revendication 6 comprenant en outre au moins un agent tensioactif.

8. La composition de polyol formulée de la revendication 7 dans laquelle l'auxiliaire est le 1,2-trans-dichloroéthène.
